# EUROPEAN PATENT SPECIFICATION

(11) **EP 3 408 905 B1**
(45) Date of publication and mention of the grant of the patent: **22.04.2020**
(21) Application number: 17710388.4
(22) Date of filing: 25.01.2017
(51) Int. Cl.: H02G 5/08, H02G 5/06, H02G 5/00

(54) **TAP-OFF ELEMENT FOR AN ENCASED BUSBAR SYSTEM**
ABGANGSELEMENT FÜR EIN SAMMELSCHIENENSYSTEM IN EINEM GEHÄUSE
ÉLÉMENT DE DÉRIVATION POUR UN SYSTÈME DE BARRE OMNIBUS INTÉGRÉ

(30) Priority: 29.01.2016 IT UB20160023
(43) Date of publication of application: 05.12.2018
(73) Proprietor: BTICINO S.P.A., 21100 Varese (VA) (IT)
(72) Inventor: PASSERA, Costantino, 20147 Milano (MI) (IT); FABRIZI, Fabrizio, 24100 Bergamo (BG) (IT)
(74) Representative: Perani & Partners S.p.A.
(86) International application number: PCT/IB2017/050394
(87) International publication number: WO 2017/130119

(56) References cited:
- DE-A1-102008 045 650
- US-A- 3 383 458
- US-A- 4 112 249
- US-A- 4 886 468

## Description

### FIELD OF THE INVENTION

The present invention relates to a busbar for power distribution.

### Discussion of the related art

The provision of busbars for power distribution is known in the art. Particularly, busbars are used when significant load currents are required to be carried, e.g. in industrial or service-sector buildings, in which currents range from a few hundreds to a few thousands of Amperes.

Busbars consist of a casing which contains various parallel conductors having a generally rectangular shape. Such busbars are formed with preset lengths, such that they may be easily fabricated and handled and they may be installed in different types of buildings. In order to carry current into the building and supply it to consuming units, busbars are connected in series by means of special junction devices, and the consuming units are connected to the busbar conductors by means of plugs.

### Prior art problem

The use of such plugs has heretofore forced busbar manufacturers to leave enough space between busbar conductors to allow the introduction of plug contacts.

Nevertheless, effective heat dissipation requires the conductors to be as close as possible. Also, busbar conductors should be close together due to the need for an appropriate contact pressure to provide the structural rigidity required to maintain the conductors in their seats even under high forces, such as in case of short-circuit.

One of the solutions that have been suggested in the art is to form busbar conductors with folds, so that the conductors are close together along most of their length, while the conductors are spaced apart at the portion in which connection with external consuming units is required, for engagement with the plug contacts. This solution has the drawback of increasing the size of the busbar, especially as compared with the size of busbars that do not require tap-offs. Also, these busbars have a more complex manufacturing process, requiring various folding operations upon the conductors. Furthermore, in case of short-circuit, busbar conductors are exposed to high forces, and special members must be provided form holding conductors in place. The provision of folds for spacing conductors apart is a weak point in view of this requirement.

Document US 4886468 describes a busbar wherein the busbar conductors are arranged parallel within the casing, and extend straight in a longitudinal direction, despite the presence of tap-off elements. The tap-off elements are soldered directly to the edge of the busbar conductors.

Document US 3383458 describes a busbar for low-power electronic applications, wherein pin-like tap-off elements are inserted into holes formed within the edges of the busbar conductors. Consecutive busbar conductors are fixed by screws at end portions with lower thickness.

### SUMMARY OF THE INVENTION

The object of the present invention is to provide a busbar that affords easy connection of tap-off plugs while maintaining a compact and both electrically and mechanically stable construction.

This object is fulfilled by a busbar as defined in claim 1.

### BRIEF DESCRIPTION OF THE DRA WINGS

The features and advantages of the present disclosure will appear from the following detailed description of a possible practical embodiment, illustrated as a nonlimiting example in the set of drawings, in which:
- Figure 1 shows a lateral plan view of an busbar according to a first embodiment of the present invention,
- Figure 2 shows a top plan view of the busbar of Figure 1,
- Figure 3 shows a sectional view of the busbar of Figure 2,
- Figure 4 shows a detail of the view of Figure 3,
- Figure 5 shows a lateral plan view of an busbar according to a second embodiment of the present invention, without the casing,
- Figure 6 shows a top plan view of the busbar of Figure 5,
- Figure 7 shows a sectional view of the busbar of Figure 6.

The busbar as shown in the accompanying figures shall be deemed to be schematically illustrated, not necessarily drawn to scale, and not necessarily representing the actual proportions of its parts.

### DETAILED DESCRIPTION

Even when this is not expressly stated, the individual features as described with reference to the particular embodiments shall be intended as auxiliary to and/or interchangeable with other features described with reference to other exemplary embodiments.

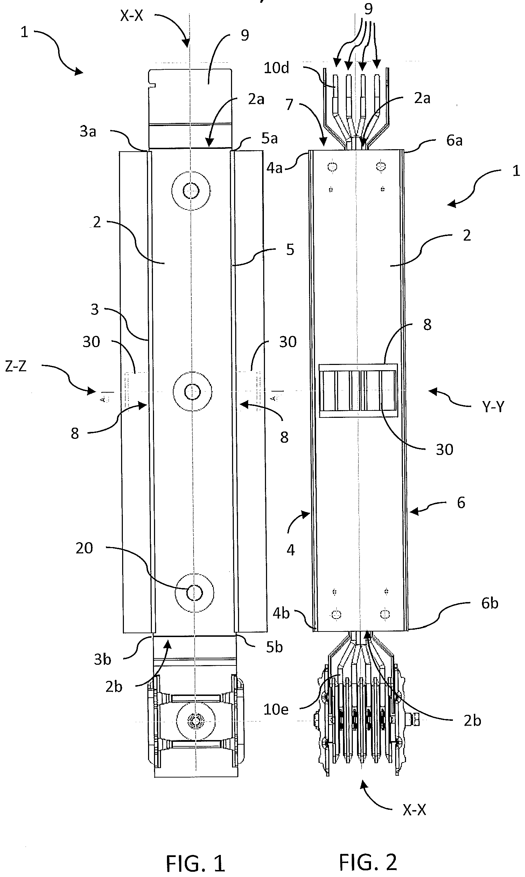

Referring to Figure 1, numeral 1 designates a busbar of the present invention. The busbar 1 comprises a casing 2 which extends mainly in a longitudinal direction X-X and comprises a plurality of mutually connected side walls which delimit a cavity 7.

Preferably, the casing 2 comprises four side walls 3, 4, 5, 6 which extend on planes parallel to the longitudinal direction X-X, such that the planes of two side walls 3, 5 are parallel to each other and orthogonal to the planes of the other two side walls 4, 6.

The side walls 3, 4, 5, 6 extend between opposite ends 3a, 4a, 5a, 6a and 3b, 4b, 5b, 6b in which they define respective openings 2a, 2b.

The casing 2 is preferably made of a metal material and is connected to a ground system.

The casing 2 has a tap-off opening 8 formed in at least one of the side walls, in this example the side walls 3 and 5. This tap-off opening 8 puts the cavity 8 in communication with the outside of the casing 2 and hence provides access to the cavity 8 from the outside of the casing 2.

The busbar 1 comprises a plurality of busbar conductors, generally referenced 9, in parallel arrangement in the cavity 7 of the casing 2. Busbar conductors 9 are electrically insulated from each other and from the casing 2 in a conventional manner.

The busbar 1 also comprises one or more clamping members 20 which are coupled outside the casing 2 to hold the busbar conductors 9 within the casing 2. Preferably, each clamping member 20 comprises a screw 21, having a head 22 and a stem 23, and a nut 24 coupled to the stem 23. The head 22 and the nut 24 act on opposite side walls 4, 6 of the casing 2, in this example with the interposition of respective plates 25, 26. The opposite side walls 4, 6 of the casing 2 and the busbar conductors 9 comprise respective through holes for the passage of the stem 23. Preferably, the stem 23 of the screw 21 extends in the first direction Y-Y.

The number of conductors may change according to the power distribution system in use. In a three-phase power distribution system, the busbar 1 comprises three phase conductors 10, 11, 12 and a neutral conductor 13, as well as a ground conductor 14.

For simplicity's sake, reference will be made hereinafter to the busbar conductor 10 to represent the features of each of the busbar conductors 9.

The busbar conductor 10 extends mainly along the longitudinal direction X-X and is spaced from the adjacent conductor 11 along a first direction Y-Y perpendicular to the longitudinal direction X-X. Preferably, the busbar conductors 10 are arranged adjacent to and in contact with each other.

The busbar conductor 10 has a central portion 10a and two opposite edge portions 10b, 10c, which extend along the longitudinal direction X-X, which define long sides of the busbar conductors 10, and which are separated by the central portion 10a along a second direction Z-Z perpendicular to the longitudinal direction X-X and to the first direction Y-Y.

The busbar conductor 10 also has two opposite end portions 10d and 10e which define short sides of the busbar conductor 10 and project out of the casing 2 on opposite sides from the openings 2a and 2b respectively. These end portions 10d, 10e are configured to connect the busbar 1 in series with another busbar, e.g. by means of a junction device, or in series with other distribution members.

The busbar conductors 9 extend along a straight direction inside the casing 2 so that the distance between the busbar conductors 9 along the first direction Y-Y is constant inside the casing 2. Outside the casing 2, the end portions of at least one busbar conductor, e.g. the end portions 10d, 10e of the busbar conductor 10, lie on a plane that is parallel to and offset along the direction Y-Y from the plane in which such busbar conductor lies within the casing 2.

In the busbar conductor 10, the thicknesses of the central portion 10a and of at least one of the edge portions, in the example of the figures both edge portions 10b, 10c, as measured in the first direction Y-Y, have values s1 and s2 respectively, s2 being less than s1.

The busbar 1 comprises a plurality of tap-off elements made of an electrically conductive material. In this example, the busbar 1 comprises three phase tap-off elements 30, 31, 32 for the individual three phase conductors 10, 11, 12, a neutral tap-off element 33 for the neutral conductor 12, as well as a ground tap-off element 34 for the ground conductor 14.

Preferably, the busbar 1 comprises a protective conductor 15 which is externally connected to the casing 2 and the ground tap-off element 34. The external distribution system may be connected to the protective conductor 15 for grounding.

For simplicity, reference will be made herein to the tap-off element 30 to represent the features of each of the tap-off elements 30, 31, 32, 33, 34.

The tap-off element 30 is stably fixed to its respective busbar conductor 10 and passes through the tap-off opening 8 to bring electric current from the busbar conductor 10 to an external power distribution system. Particularly, the tap-off element 30 is stably fixed to the busbar conductor 10 at a contact surface 16 of the edge portion 10b.

According to the invention the contact surface 16 of the busbar conductor 10 and the tap-off bar 30 are welded together. This ensures stable contact in both electrical and mechanical terms.

It shall be noted that, in order to establish an electric contact with the tap-off element 30, the contact surface 16 of the busbar conductor 10 is devoid of the electric insulation which is required, as mentioned above, for mutual insulation of the busbar conductors 10, 11, 12, 13, 14.

The thickness s2 of the edge portion, which is smaller than the thickness s1 of the central portion, provides a contact surface for fixation of a tap-off element without requiring the busbar conductors to be spaced apart for fixation of the tap-off element. By this arrangement, the busbar conductors may be maintained close to, and in particular in contact with, each other, thereby providing advantages in terms of heat dissipation and robustness of the busbar 1.

According to one embodiment, the tap-off element 30 comprises a conductive tap-off plate which extends between a first end 30a and a second end 30b along the second direction Z-Z.

The first end 30a comprises a contact surface 36 which is stably fixed to the contact surface 16 of the edge portion 10b of the busbar conductor 10 whereas the second end 30b is configured to establish contact with a contact element of a power distribution system, e.g. a female contact element of a plug.

According to one embodiment, the tap-off plate 30 has a first portion 35a which ends with the first end 30a, a second portion 35b which ends with the second end 30b and a joining portion 35c which joins the first portion 35a to the second portion 35b. The first portion 35a and the second portion 35b are parallel to each other and the joining portion 35c is inclined relative to the first and the second portions 35a, 35b so as to form two folding areas 35d, 35e. By this arrangement, the second portion 35b extends on a plane that is offset along the first direction Y-Y from the plane on which the first portion 35a extends, to thereby increase the distance of the second ends of the tap-off elements from the first direction Y-Y and provide a larger space at said second ends for introduction of the contact elements of the power distribution system, i.e. for introduction of the tines of a female contact.

Advantageously, the first portion 35a extends on a plane which substantially corresponds to the plane of the contact surface 16 of the busbar 10 and the second portion 35b extends on a plane parallel to the plane of the first portion 35a and offset therefrom along the first direction Y-Y.

Preferably, the first end 30a has a thickness s3 such that s2+s3 is less than or equal to s1. Thus, the first end 30a of the tap-off bar 30 is coupled to the busbar conductor 10 and such first end 30 will not be required to project in the first direction Y-Y relative to the central portion 10a of the busbar conductor 10, which will allow the busbar conductors 9 to contact each other. Therefore, the overall thickness of the first end 30a of the tap-off bar 30 and the edge portion 10b in the first direction Y-Y will not exceed the thickness of the central portion 10 of the busbar conductor.

Preferably, the thickness s1 is twice the thickness s2 and as a result the thickness s3 is equal to s2. This arrangement provides an optimized balance of the sections of the busbar conductors, and avoids the presence of excessively narrow sections along the current path. This will maintain a low overall resistance.

According to one embodiment, the second end 30b has a thickness s4 greater than s3. This will reduce the resistance of the tap-off bar 30.

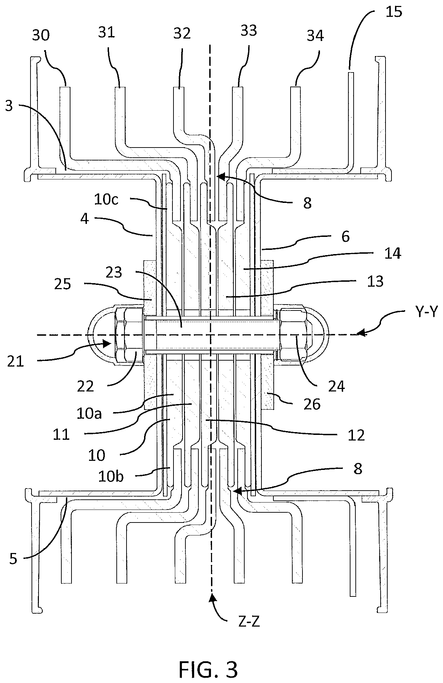

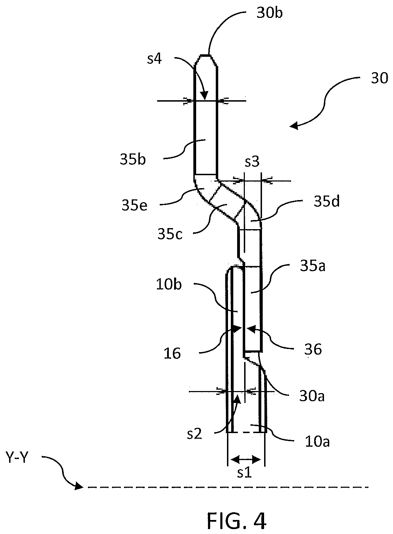

In the embodiment as shown in Figures 1 to 4, all the tap-off elements are fixed to the respective busbar conductor in the same longitudinal position. This embodiment will afford the provision of a tap-off opening 8 with a longitudinal extent that substantially matches that of a tap-off element, and will require the tap-off plates to be formed with folding areas arranged along the second direction Z-Z in a forward position relative to the adjacent tap-off plates, which will result in second portions having different extents along the direction Z-Z, particularly decreasing from the tap-off plates that are closer to the side walls of the casing toward the central area of the casing.

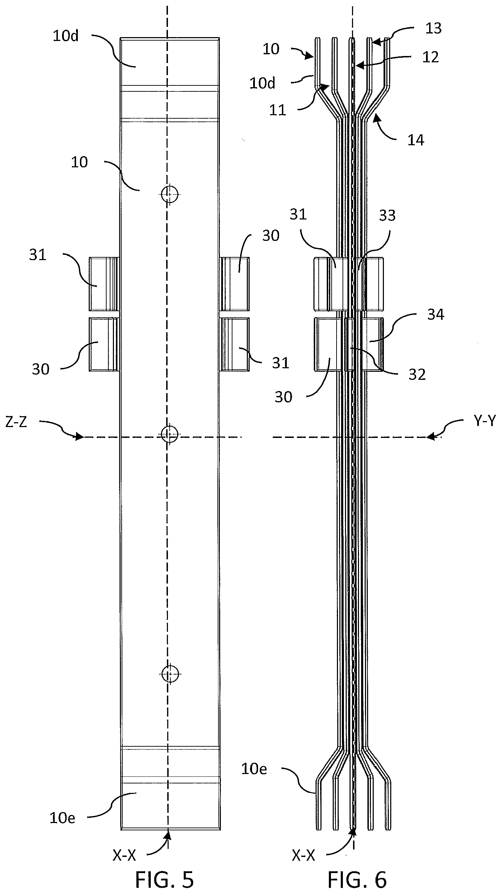

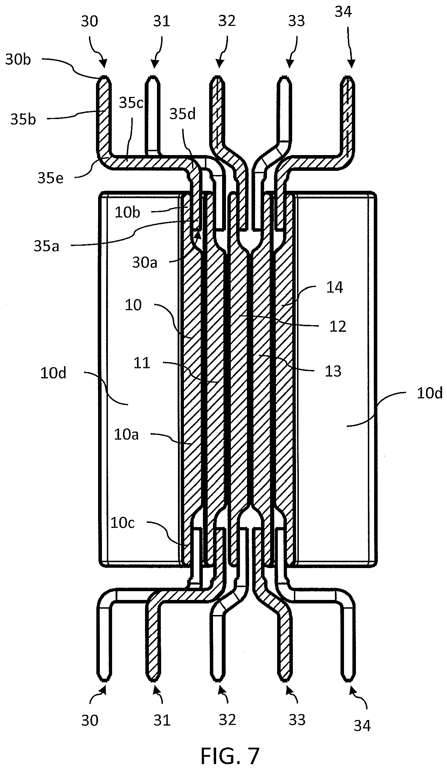

In the embodiment of Figures 5 to 7, each tap-off element is fixed to the respective busbar conductor in a respective longitudinal position and at least one tap-off element is fixed to the respective busbar conductor in a longitudinal position offset from the longitudinal position of the other tap-off elements. This embodiment will require a tap-off opening 8 having a greater longitudinal extent than the individual tap-off elements, but will allow the formation of tap-off plates with second portions having the same extent along the second direction Z-Z.

Those skilled in the art will obviously appreciate that a number of changes and variants as described above may be made to fulfill particular requirements, without departure from the scope of the invention, as defined in the following claims.

## Claims

1. Busbar (1) comprising:
- a casing (2) comprising a plurality of sidewalls (3,4,5,6) that delimit a cavity (7),
- a tap-off opening (8) formed in at least one of said sidewalls (3,4,5,6),
- a plurality of busbar conductors (10, 11, 12, 13, 14) arranged parallel inside said cavity (7), wherein each busbar conductor (10) extends along a longitudinal direction (X-X), is spaced from the adjacent busbar conductor along a first direction (Y-Y) perpendicular to the longitudinal direction (X-X) and has a central portion (10a) and two edge portions (10b, 10c) spaced from each other by the central portion (10a), said edge portions (10b, 10c) of the busbar conductors extend longitudinally and are spaced from each other along a second direction (Z-Z) perpendicular to the longitudinal direction (X-X) and to the first direction (Y-Y),
- clamping members (20) externally coupled to said casing (2) for holding said plurality of busbar conductors (10, 11, 12, 13, 14) inside said casing (2),
- a plurality of tap-off elements (30, 31, 32, 33, 34), each tap-off element being stably fixed to a respective busbar conductor (10, 11, 12, 13, 14) and passing through said tap-off opening (8) in order to bring electric current from said plurality of busbar conductors (10, 11, 12, 13, 14) to a power supply system,
- said plurality of busbar conductors (10, 11, 12, 13, 14) extend along a straight direction inside said casing (2) so that the distance between the busbar conductors (10, 11, 12, 13, 14) along the first direction (Y-Y) is constant inside said casing (2),
**characterized in that:**
- in each busbar conductor (10), the thickness of the central portion (10a) and of at least one of said two edge portions (10b, 10c), as measured in the first direction (Y-Y), have values s1 and s2 respectively, s2 being less than s1,
- each tap-off element (30) is stably fixed to a respective busbar conductor (10) at a contact surface (16) of said at least one edge portion (10b, 10c) having a thickness s2, the contact surface (16) of the busbar conductor (10) and the tap-off element (30) being welded together.

2. Busbar (1) according to claim 1, wherein:
- each tap-off element (30) comprises a conductive tap-off plate which extends between a first end (30a) and a second end (30b) along the second direction (Z-Z),
- the first end (30a) comprises a contact surface (36) stably fixed to the contact surface (16) of the edge portion (10b, 10c) of the respective busbar conductor (10),
- the second end (30b) is configured to contact a contact element of a power supply system.

3. Busbar (1) according to claim 2, wherein:
- each tap-off plate (30) has a first portion (35a) which ends with the first end (30a), a second portion (35b) which ends with the second end (30b) and a joining portion (35c) which joins the first portion (35a) to the second portion (35b),
- the first portion (35a) and the second portion (35b) are parallel to each other and the joining portion (35c) is inclined relative to the first and the second portion (35a, 35b) so as to form two folding areas (35d, 35e).

4. Busbar (1) according to claim 3, wherein:
- the first portion (35a) extends on a plane which substantially corresponds to the plane of the contact surface (16) of the corresponding busbar conductor (10),
- the second portion (35b) extends on a plane which is parallel to the plane of the first portion (35a) and offset therefrom along the first direction (Y-Y).

5. Busbar (1) according to claim 3 or 4, wherein:
- the first end (30a) has a thickness s3 such that s2+s3 is less than or equal to s1.

6. Busbar (1) according to any one of claims 3 to 5, wherein:
- the second end (30b) has a thickness s4 greater than s3.

7. Busbar (1) according to any one of claims 1 to 6, wherein the thickness s1 is twice the thickness s2

8. Busbar (1) according to any one of claims 1 to 7, wherein:
- in each busbar conductor, the thickness of said two edge portions (10b, 10c) is equal to s2.

9. Busbar (1) according to any one of claims 1 to 8, wherein:
- each tap-off element (30) is fixed to the respective busbar conductor (10) in a respective longitudinal position,
- at least one tap-off element is fixed to the respective busbar conductor in a longitudinal position offset relative to the longitudinal position of the other tap-off elements.

10. Busbar (1) according to any one of claims 1 to 8, wherein:
- each tap-off element (30) is fixed to the respective busbar conductor in a respective longitudinal position,
- all the tap-off elements are fixed to the respective busbar conductor in the same longitudinal position.

## Patentansprüche

1. Sammelschiene (1) umfassend:
- ein Gehäuse (2), umfassend eine Vielzahl von Seitenwänden (3,4,5,6), die einen Hohlraum (7) begrenzen,
- eine Abgangsöffnung (8), die in mindestens eine dieser Seitenwände (3,4,5,6) ausgebildet ist,
- eine Vielzahl von Sammelschienenleitern (10, 11, 12, 13, 14), die parallel im Inneren des Hohlraums (7) angeordnet sind, wobei jeder Sammelschienenleiter (10) sich entlang einer Längsrichtung (X-X) erstreckt, vom benachbarten Sammelschienenleiter entlang einer ersten Richtung (Y-Y) senkrecht zur Längsrichtung (X-X) beabstandet ist und einen Mittelabschnitt (10a) und zwei Kantenabschnitte (10b, 10c) aufweist, die durch den Mittelabschnitt (10a) voneinander beabstandet sind; die Kantenabschnitte (10b, 10c) der Sammelschienenleiter sich in Längsrichtung erstrecken und entlang einer zweiten Richtung (Z-Z) voneinander beabstandet sind, die senkrecht zur Längsrichtung (X-X) und zur ersten Richtung (Y-Y) verläuft,
- Spannglieder (20), die außenseitig mit dem Gehäuse (2) gekoppelt sind, um die Vielzahl von Sammelschienenleitern (10, 11, 12, 13, 14) im Innern des Gehäuses (2) zu halten,
- eine Vielzahl von Abgangselementen (30, 31, 32, 33, 34), wobei jedes Abgangselement stabil
an einem jeweiligen Sammelschienenleiter (10, 11, 12, 13, 14) befestigt ist und durch die Abgangsöffnung (8) hindurchtritt, um elektrischen Strom aus der Vielzahl von Sammelschienenleitern (10, 11, 12, 13, 14) in ein Stromversorgungssystem zu bringen,
- die Vielzahl von Sammelschienenleitern (10, 11, 12, 13, 14) sich entlang einer geraden Richtung im Inneren des Gehäuses (2) erstrecken, so dass der Abstand zwischen den Sammelschienenleitern (10, 11, 12, 13, 14) entlang der ersten Richtung (Y-Y) im Inneren des Gehäuses (2) konstant ist,
**dadurch gekennzeichnet, dass:**
- in jedem Sammelschienenleiter (10), die Dicke des Mittelabschnitts (10a) und des mindestens einen der zwei Kantenabschnitte (10b, 10c), gemessen in der ersten Richtung (Y- Y), jeweils Werte s1 und s2 aufweisen, wobei s2 kleiner als s1 ist,
- jedes Abgangselement (30) stabil an einem jeweiligen Sammelschienenleiter (10) an einer Kontaktfläche (16) des mindestens einen, eine Dicke s2 aufweisenden Kantenabschnitts (10b, 10c) befestigt ist, wobei die Kontaktfläche (16) des Sammelschienenleiters (10) und das Abgangselement (30) miteinander verschweißt sind.

2. Sammelschiene (1) nach Anspruch 1, wobei:
- jedes Abgangselement (30) eine leitfähige Abgangsplatte umfasst, die sich zwischen einem ersten Ende (30a) und einem zweiten Ende (30b) entlang der zweiten Richtung (Z-Z) erstreckt,
- das erste Ende (30a) eine Kontaktfläche (36) umfasst, die stabil an der Kontaktfläche (16) des Kantenabschnitts (10b, 10c) des jeweiligen Sammelschienenleiters (10) befestigt ist,
- das zweite Ende (30b) dazu eingerichtet ist, ein Kontaktelement eines Stromversorgungssystems zu kontaktieren.

3. Sammelschiene (1) nach Anspruch 2, wobei:
- jede Abgangsplatte (30) einen ersten Abschnitt (35a), der mit dem ersten Ende (30a) endet, einen zweiten Abschnitt (35b), der mit dem zweiten Ende (30b) endet und einen Verbindungsabschnitt (35c), der den ersten Abschnitt (35a) mit dem zweiten Abschnitt (35b) verbindet, aufweist
- der erste Abschnitt (35a) und der zweite Abschnitt (35b) parallel zueinander sind und der Verbindungsabschnitt (35c) relativ zum ersten und zum zweiten Abschnitt (35a, 35b) geneigt ist, um zwei Faltenbereiche (35d, 35e) zu bilden.

4. Sammelschiene (1) nach Anspruch 3, wobei:
- der erste Abschnitt (35a) sich in einer Ebene erstreckt, die im Wesentlichen der Ebene der Kontaktfläche (16) des entsprechenden Sammelschienenleiters (10) entspricht,
- der zweite Abschnitt (35b) sich in einer Ebene erstreckt, die parallel zur Ebene des ersten Abschnitts (35a) ist und zu dieser entlang der ersten Richtung (Y-Y) versetzt verläuft.

5. Sammelschiene (1) nach Anspruch 3 oder 4, wobei:
- das erste Ende (30a) eine Dicke s3 aufweist, so dass s2+s3 kleiner oder gleich s1 ist.

6. Sammelschiene (1) nach irgendeinem der Ansprüche von 3 bis 5, wobei:
- das zweite Ende (30b) eine Dicke s4 aufweist, die größer als s3 ist.

7. Sammelschiene (1) nach irgendeinem der Ansprüche von 1 bis 6, wobei die Dicke s1 das zweifache der Dicke s2 beträgt

8. Sammelschiene (1) nach irgendeinem der Ansprüche von 1 bis 7, wobei:
- in jedem Sammelschienenleiter, die Dicke der zwei Kantenabschnitte (10b, 10c) gleich s2 ist,

9. Sammelschiene (1) nach irgendeinem der Ansprüche von 1 bis 8, wobei:
- jedes Abgangselement (30) an dem jeweiligen Sammelschienenleiter (10) in einer jeweiligen Längsposition befestigt ist,
- mindestens ein Abgangselement an dem jeweiligen Sammelschienenleiter in einer gegenüber der Längsposition des anderen Abgangselements versetzten Längsposition befestigt ist.

10. Sammelschiene (1) nach irgendeinem der Ansprüche von 1 bis 8, wobei:
- jedes Abgangselement (30) an dem jeweiligen Sammelschienenleiter (10) in einer jeweiligen Längsposition befestigt ist,
- alle Abgangselemente an dem jeweiligen Sammelschienenleiter in der gleichen Längsposition befestigt sind.

## Revendications

1. Barre omnibus (1) comprenant :
- un boîtier (2) comprenant une pluralité de parois latérales (3,4,5,6) qui délimitent une cavité (7),
- une ouverture de dérivation (8) formée sur l'au moins une desdites parois latérales (3,4,5,6),
- une pluralité de conducteurs de barre omnibus (10, 11, 12, 13, 14) agencés parallèlement à l'intérieur de ladite cavité (7), dans laquelle chaque conducteur de barre omnibus (10) s'étend le long d'une direction longitudinale (X-X), est espacée du conducteur de barre omnibus adjacent le long d'une première direction (Y-Y) perpendiculaire à la direction longitudinale (X-X) et a une partie centrale (10a) et deux parties de bord (10b, 10c) espacées l'une de l'autre par la partie centrale (10a), lesdites parties de bord (10b, 10c) des conducteurs de barre omnibus s'étendent longitudinalement et sont espacées l'une de l'autre le long d'une deuxième direction (Z-Z) perpendiculaire à la direction longitudinale (X-X) et à la première direction (Y-Y),
- des éléments de serrage (20) couplés à l'extérieur audit boîtier (2) pour soutenir ladite pluralité de conducteurs de barre omnibus (10, 11, 12, 13, 14) à l'intérieur dudit boîtier (2),
- une pluralité d'éléments de dérivation (30, 31, 32, 33, 34), chaque élément de dérivation étant fixé de manière stable à un respectif conducteur de barre omnibus (10, 11, 12, 13, 14) et passant à travers ladite ouverture de dérivation (8) afin d'amener le courant électrique de ladite pluralité de conducteurs de barre omnibus (10, 11, 12, 13, 14) à un système d'alimentation électrique,
- ladite pluralité de conducteurs de barre omnibus (10, 11, 12, 13, 14) s'étend le long d'une direction droite à l'intérieur dudit boîtier (2) de sorte que la distance entre les conducteurs de barre omnibus (10, 11, 12, 13, 14) le long de la première direction (Y-Y) soit constante à l'intérieur dudit boîtier (2),
**caractérisée en ce que :**
- dans chaque conducteur de barre omnibus (10), l'épaisseur de la partie centrale (10a) et d'au moins une entre lesdites deux parties de bord (10b, 10c), telle que mesurée dans la première direction (Y-Y), ont, respectivement les valeurs s1 et s2, s2 étant inférieure à s1,
- chaque élément de dérivation (30) est fixé de manière stable à un respectif conducteur de barre omnibus (10) sur une surface de contact (16) de ladite au moins une partie de bord (10b, 10c) ayant une épaisseur s2, la surface de contact (16) du conducteur de barre omnibus (10) et l'élément de dérivation (30) étant soudés ensemble.

2. Barre omnibus (1) selon la revendication 1, dans laquelle :
- chaque élément de dérivation (30) comprend une plaque de dérivation conductrice qui s'étend entre une première extrémité (30a) et une deuxième extrémité (30b) le long de la deuxième direction (Z-Z),
- la première extrémité (30a) comprend une surface de contact (36) fixée de manière stable à la surface de contact (16) de la partie de bord (10b, 10c) du respectif conducteur de barre omnibus (10),
- la deuxième extrémité (30b) est configurée pour venir en contact avec un élément de contact d'un système d'alimentation électrique.

3. Barre omnibus (1) selon la revendication 2, dans laquelle :
- chaque plaque de dérivation (30) a une première partie (35a) qui termine avec la première extrémité (30a), une deuxième partie (35b) qui termine avec la deuxième extrémité (30b) et une partie de jonction (35c) qui unit la première partie (35a) à la deuxième partie (35b),
- la première partie (35a) et la deuxième partie (35b) sont parallèles l'une à l'autre et la partie de jonction (35c) est inclinée par rapport à la première et à la deuxième partie (35a, 35b) afin de former les deux zones de pliage (35d, 35e).

4. Barre omnibus (1) selon la revendication 3, dans laquelle :
- la première partie (35a) s'étend sur un plan qui correspond sensiblement au plan de la surface de contact (16) du conducteur de barre omnibus (10) correspondant,
- la deuxième partie (35b) s'étend sur un plan qui est parallèle au plan de la première partie (35a) et décalé par rapport à celui-ci le long de la première direction (Y-Y).

5. Barre omnibus (1) selon la revendication 3 ou 4, dans laquelle :
- la première extrémité (30a) a une épaisseur s3 de sorte que s2+s3 soit inférieure ou égale à s1.

6. Barre omnibus (1) selon l'une quelconque des revendications 3 à 5, dans laquelle :
- la deuxième extrémité (30b) a une épaisseur s4 supérieure à s3.

7. Barre omnibus (1) selon l'une quelconque des revendications 1 à 6, dans laquelle l'épaisseur s1 est deux fois l'épaisseur s2.

8. Barre omnibus (1) selon l'une quelconque des revendications 1 à 7, dans laquelle :
- dans chaque conducteur de barre omnibus, l'épaisseur desdites deux parties de bord (10b, 10c) est égale à s2,

9. Barre omnibus (1) selon l'une quelconque des revendications 1 à 8, dans laquelle :
- chaque élément de dérivation (30) est fixé au respectif conducteur de barre omnibus (10) dans une position longitudinale respective,
- au moins un élément de dérivation est fixé au respectif conducteur de barre omnibus dans une position longitudinale décalée par rapport à la position longitudinale des autres éléments de dérivation.

10. Barre omnibus (1) selon l'une quelconque des revendications 1 à 8, dans laquelle :
- chaque élément de dérivation (30) est fixé au respectif conducteur de barre omnibus dans une position longitudinale respective,
- tous les éléments de dérivation sont fixés au respectif conducteur de barre omnibus dans la même position longitudinale.
